# EUROPEAN PATENT APPLICATION

(11) **EP 4 797 118 A1**
(43) Date of publication of application: **26.08.2026**
(21) Application number: 25876066.9
(22) Date of filing: 26.02.2025
(51) Int. Cl.: G06F 16/25, G06F 16/215, G06F 18/10, G06Q 10/20

(54) **END-TO-END DATA MANAGEMENT METHOD AND APPARATUS, AND COMPUTER DEVICE AND STORAGE MEDIUM**

(30) Priority: 30.12.2024 CN 202411975234
(71) Applicant: Thinkcar Tech Co., Ltd., Shenzhen, Guangdong 518100 (CN)
(72) Inventor: LEI, Yundong, Shenzhen, Guangdong 518100 (CN); ZHANG, Wei, Shenzhen, Guangdong 518100 (CN); YAO, Di, Shenzhen, Guangdong 518100 (CN)
(74) Representative: Vogelbruch, Keang
(86) International application number: PCT/CN2025/079358
(87) International publication number: WO 2026/143831

(57) **Abstract**

The present invention relates to the field of data management, and discloses a full-link data management method, a full-link data management apparatus, a computer device, and a storage medium. The full-link data management method of the present invention includes designing an automotive repair corpus classification template according to an application scenario and a business requirement; formulating a collection scheme based on the classification template to acquire vehicle diagnostic and maintenance data; performing first preprocessing on the acquired data to obtain standardized vehicle diagnostic and maintenance data; auditing the data to obtain standard vehicle diagnostic and maintenance data; performing second preprocessing on the standard vehicle diagnostic and maintenance data to obtain data meeting a requirement, and storing the data in a database to generate an automotive repair corpus. The full-link data management method of the present invention covers data collection, cleaning, audit, and storage, thereby establishing a full-link data management process.

## Description

### CROSS-REFERENCE TO RELATED APPLICATIONS

The present invention claims priority to Chinese Patent Application No. 2024119752348, filed with the China National Intellectual Property Administration on December 30, 2024, and entitled "FULL-LINK DATA MANAGEMENT METHOD AND APPARATUS, COMPUTER DEVICE, AND STORAGE MEDIUM", which is incorporated herein by reference in its entirety.

### TECHNICAL FIELD

The present invention relates to the technical field of data management, and in particular, to a full-link data management method, a full-link data management apparatus, a computer device, and a storage medium.

### BACKGROUND

With the rapid development of artificial intelligence technologies, especially the widespread application of large language models (such as GPT and BERT), data has become a core element for model research, development, and application. During a large model training stage, high-quality data directly affects model accuracy, generalization capability, and practical performance; and during a model application stage, data likewise serves as an important support for achieving precise inference and intelligent output. Therefore, data collection, development, management, and application run through an entire large model lifecycle, and serve as key guarantees for model performance improvement and scenario implementation.

However, existing data tools on the market mainly focus on loading local data into vector databases, and typically provide basic data storage and retrieval capabilities, but suffer from the following deficiencies:
Lack of data collection task management: Existing tools fail to cover functions such as task assignment, source management, and collection standard formulation during a data collection stage, resulting in difficulty in ensuring data collection efficiency and data quality.

Insufficient data development and cleaning functions: Most data tools lack standardized and normalized data processing mechanisms, and are unable to efficiently perform preprocessing, cleaning, and auditing on raw data, thereby making formation of high-quality data suitable for large model training difficult.

Insufficient corpus management and application capability: Current tools generally only support simple data loading and storage, lack flexible management of structured data and corpus classification templates, and are unable to satisfy multi-scenario data application requirements, such as intelligent retrieval for data supply and invocation of model inference interfaces.

Weak coordination and collaboration capability: Data tools lack unified management and process coordination for an entire data lifecycle, and are unable to effectively coordinate a full-link process from data collection, to data storage, and further to application output.

Therefore, in view of the above problems, there is an urgent need to develop a full-link data management method and tool, so as to implement unified management of data collection, development, cleaning, storage, and application, to connect various stages of data from a source to application, to address deficiencies of data tools in task management, quality control, corpus classification management, and application integration, and to provide high-quality data support for research, development, and practical application of large models, thereby further enhancing industry competitiveness and application effectiveness.

### SUMMARY

In view of this, embodiments of the present invention provide a full-link data management method, a full-link data management apparatus, a computer device, and a storage medium, which can effectively address problems in the prior art including incomplete data management processes, and lack of systematic collection, cleaning, auditing and application mechanisms, resulting in low data quality, insufficient standardization, and low efficiency of storage and external application.

According to a first aspect, an embodiment of the present invention provides a full-link data management method, which includes:
designing an automotive repair corpus classification template according to an application scenario and a business requirement;
formulating a collection scheme based on the automotive repair corpus classification template and acquiring vehicle diagnostic and maintenance data;
performing first preprocessing on the vehicle diagnostic and maintenance data to obtain standardized vehicle diagnostic and maintenance data, and auditing the standardized vehicle diagnostic and maintenance data to obtain standard vehicle diagnostic and maintenance data; and
performing second preprocessing on the standard vehicle diagnostic and maintenance data to obtain to-be-stored vehicle diagnostic and maintenance data meeting a requirement, and storing the to-be-stored vehicle diagnostic and maintenance data meeting the requirement in a database to generate an automotive repair corpus.

In some embodiments, designing the automotive repair corpus classification template according to the application scenario and the business requirements includes: determining target corpus content based on the application scenario; and
classifying corpus categories according to the target corpus content, and formulating corresponding classification standards for each corpus category to form the automotive repair corpus classification template.

In some embodiments, formulating the collection scheme based on the automotive repair corpus classification template and acquiring the vehicle diagnostic and maintenance data includes:
analyzing and determining a collection source of the vehicle diagnostic and maintenance data according to the automotive repair corpus classification template;
evaluating the collection source, formulating a collection scope and a collection standard, and generating a collection task; and
distributing the collection task to a corresponding device for execution to obtain the vehicle diagnostic and maintenance data from different collection sources.

In some embodiments, performing first preprocessing on the vehicle diagnostic and maintenance data to obtain the standardized vehicle diagnostic and maintenance data includes:
performing formatting process on the vehicle diagnostic and maintenance data based on a preset cleaning template to obtain vehicle diagnostic and maintenance data with a unified format; and
inputting the vehicle diagnostic and maintenance data with the unified format into a preset language model, and generating the standardized vehicle diagnostic and maintenance data according to a format requirement and a content requirement of the automotive repair corpus classification template.

In some embodiments, auditing the standardized vehicle diagnostic and maintenance data to obtain the standard vehicle diagnostic and maintenance data includes:
verifying accuracy and integrity of the standardized vehicle diagnostic and maintenance data based on a predetermined audit standard; and
correcting or supplementing standardized vehicle diagnostic and maintenance data failing to satisfy the audit standard until the standardized vehicle diagnostic and maintenance data satisfies the audit standard, thereby generating the standard vehicle diagnostic and maintenance data.

In some embodiments, performing second preprocessing on the standard vehicle diagnostic and maintenance data to obtain the to-be-stored vehicle diagnostic and maintenance data meeting the requirement and storing the to-be-stored vehicle diagnostic and maintenance data meeting the requirement in the database to generate the automotive repair corpus includes:
vectorizing the standard vehicle diagnostic and maintenance data based on a vector model to obtain structured standard vehicle diagnostic and maintenance data; and
storing the structured standard vehicle diagnostic and maintenance data in the database according to a predetermined storage rule to obtain the automotive repair corpus.

In some embodiments, after performing second preprocessing on the standard vehicle diagnostic and maintenance data to obtain the to-be-stored vehicle diagnostic and maintenance data meeting the requirement, and storing the to-be-stored vehicle diagnostic and maintenance data meeting the requirement in the database to generate the automotive repair corpus, the full-link data management method further includes:
vectorizing query data input by a user based on a query request of the user to generate a query vector;
retrieving standard vehicle diagnostic and maintenance data in the automotive repair corpus having high similarity to the query vector using a vector similarity algorithm; and
determining standard vehicle diagnostic and maintenance data having the highest matching degree according to a retrieval result, and outputting the standard vehicle diagnostic and maintenance data through a preset interface.

According to a second aspect, an embodiment of the present invention provides a full-link data management apparatus, which includes:
a template design module, configured to design an automotive repair corpus classification template according to an application scenario and a business requirement;
a data acquisition module, configured to formulate a collection scheme based on the automotive repair corpus classification template and acquire vehicle diagnostic and maintenance data;
a first preprocessing module, configured to perform first preprocessing on the vehicle diagnostic and maintenance data to obtain the standardized vehicle diagnostic and maintenance data;
a data auditing module, configured to audit the standardized vehicle diagnostic and maintenance data to obtain the standard vehicle diagnostic and maintenance data; and
an automotive repair corpus generation module, configured to perform second preprocessing on the standard vehicle diagnostic and maintenance data to obtain to-be-stored vehicle diagnostic and maintenance data meeting a requirement, and store the to-be-stored vehicle diagnostic and maintenance data meeting the requirement in a database to generate an automotive repair corpus.

According to a third aspect, an embodiment of the present invention provides a computer device, including a processor and a memory, wherein the memory stores a computer program, and the processor is configured to execute the computer program to implement the full-link data management method according to the first aspect.

According to a fourth aspect, an embodiment of the present invention provides a computer-readable storage medium, where a computer program, when executed by a processor, implements the full-link data management method according to the first aspect.

Embodiments of the present invention have the following beneficial effects:
According to the full-link data management method, the full-link data management apparatus, the computer device, and the storage medium of the present invention, an automotive repair corpus classification template is designed according to an application scenario and a business requirement to achieve standardized classification of data, and a collection scheme is formulated to efficiently obtain vehicle diagnostic and maintenance data; the vehicle diagnostic and maintenance data is formatted and standardized by first preprocessing, thereby solving problems of inconsistent formats and redundancy in original data; the accuracy and integrity of standardized vehicle diagnostic and maintenance data is ensured by audit operation, thereby obtaining standard vehicle diagnostic and maintenance data; and the standard vehicle diagnostic and maintenance data is vectorized and structured by second preprocessing, so that the standard vehicle diagnostic and maintenance data meet storage and retrieval requirements and are stored to a database, and finally a high-quality automotive repair corpus is generated. This technical solution starts from the full link of data management, including collection, cleaning, audit, and storage, thereby implementing full-link data management. The method of the present invention effectively solves problems of missing management of data collection tasks, insufficient data standardization, and inconvenience of external application of a corpus, thereby improving quality and usability of data.

### BRIEF DESCRIPTION OF THE DRAWINGS

To more clearly illustrate the technical solutions of the embodiments of the present invention, the drawings required in the embodiments will be briefly described below. It should be understood that the following drawings only illustrate some embodiments of the present invention and therefore should not be considered as limitations of the scope, and for those of ordinary skill in the art, other related drawings can be obtained according to these drawings without inventive efforts.
FIG. 1 shows an application scenario of a full-link data management method according to an embodiment of the present invention;
FIG. 2 is a flowchart of a full-link data management method according to an embodiment of the present invention; and
FIG. 3 is a schematic diagram of a structure of a full-link data management apparatus according to an embodiment of the present invention.

### DETAILED DESCRIPTION OF THE EMBODIMENTS

The following clearly and completely describes the technical solutions in the embodiments of the present invention with reference to the drawings in the embodiments of the present invention. Apparently, the described embodiments are only a part rather than all of the embodiments of the present invention. The assemblies of embodiments of the present invention, as generally described and illustrated in the drawings herein, can be arranged and designed in a wide variety of different configurations. Therefore, the following detailed descriptions of the embodiments of the present invention provided in the drawings are not intended to limit the scope of the claimed disclosure, but merely to represent selected embodiments of the present invention. All other embodiments obtained by those skilled in the art based on the embodiments of the present invention without creative efforts shall fall within the protection scope of the present invention.

In the following description, the terms "include", "comprise", "have", and variants thereof, as used in various embodiments of the present invention, are intended only to indicate the presence of specific features, numbers, steps, operations, elements, components, or combinations thereof, and are not to be understood as excluding the existence of one or more other features, numbers, steps, operations, elements, components, or combinations thereof, or as precluding the possibility of adding one or more features, numbers, steps, operations, elements, components, or combinations thereof. In addition, the terms "first", "second", and "third" are used only for distinguishing descriptions and should not be construed as indicating or implying relative importance.

Unless otherwise specifically defined, all terms used herein (including technical and scientific terms) have the same meanings as commonly understood by those of ordinary skill in the art to which various embodiments of the present invention pertain. The terms (such as those defined in general dictionaries) are to be interpreted as having the same meanings as in the contextual use in the relevant technical field and are not to be interpreted as having idealized or overly formal meanings, unless clearly defined in various embodiments of the present invention.

The following describes some embodiments of the present invention in detail with reference to the accompanying drawings. The following embodiments and features of the embodiments may be mutually combined in the case of no conflict.

In the prior art, data management processes are incomplete, and a systematic mechanism for collection, cleaning, audit, and application is lacking, thereby resulting in low data quality, insufficient standardization, and low efficiency in storage and external application. Therefore, a full-link data management method is proposed. Specifically, an automotive repair corpus classification template is designed, a collection scheme is formulated, data cleaning and preprocessing are performed on vehicle diagnostic and maintenance data, a data quality audit is performed on standardized vehicle diagnostic and maintenance data to obtain to-be-stored vehicle diagnostic and maintenance data meeting requirements, and the vehicle diagnostic and maintenance data meeting requirements are stored in a database, so that the efficient management and external application of data are achieved, and full-link data management of collection tasks, cleaning tasks, auditing tasks, and storage tasks is implemented. On this basis, the clear division of responsibilities for each stage and efficient coordination of operation processes are ensured by a task dispatching process and an automated workflow, thereby further improving execution efficiency and management accuracy of data management, and optimizing quality and usability of data.

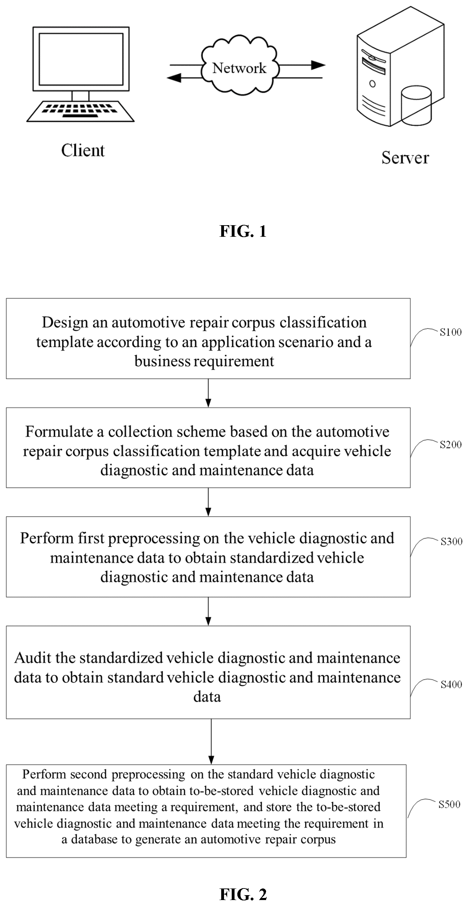

The full-link data management method provided in an embodiment of the present invention can be applied in an application environment as shown in FIG. 1. Specifically, the full-link data management method of the present invention is applied in a computer system, where the system includes a client and a server as shown in FIG. 1, the client and the server communicate through a network. The client, also referred to as a user terminal, refers to a program corresponding to the server and providing local services to a user. The client can be installed on, but is not limited to, various personal computers, laptops, smartphones, tablet computers, and portable diagnostic devices (for example, diagnostic boxes). The server can be implemented as a standalone server or a server cluster composed of a plurality of servers.

FIG. 2 is a flowchart of a full-link data management method according to an embodiment of the present invention. Exemplarily, the full-link data management method includes the following steps S100 to S500.

S100: Designing an automotive repair corpus classification template according to an application scenario and a business requirement.

Exemplarily, the application scenario refers to a specific usage environment and functional requirement served by automotive repair corpus data, including but not limited to, a fault diagnosis scenario, a maintenance guidance scenario, a circuit inspection scenario, and a parts query scenario. The business requirement refers to a specific data requirement proposed based on the application scenario. For example, the business requirement includes but is not limited to providing a complete corpus containing core content such as fault code definitions, fault code symptoms, maintenance guidance, circuit inspection, circuit testing, component testing, and maintenance guides. For example, the corpus needs to be accurate, complete, and standardized to meet requirements of maintenance guidance and diagnostic systems, and data needs to have a unified structure and format to facilitate rapid invocation and retrieval by the system. The automotive repair corpus classification template refers to a data classification and content structure standard designed according to the application scenario and the business requirement, and is configured to guide data collection, management, and application. For example, the automotive repair corpus classification template includes a fault code corpus template, a circuit diagram corpus template, and a parts description corpus template.

In an embodiment, in the step S100, designing the automotive repair corpus classification template according to the application scenario and the business requirements includes the following.

Target corpus content is determined based on the application scenario.

For example, the application scenario can include the following. Fault diagnosis scenario: when a user inputs a fault code, the system needs to return an explanation of the fault code and a maintenance plan, thereby assisting maintenance personnel in rapidly locating and resolving faults. Maintenance guidance scenario: providing standardized maintenance manual content to maintenance engineers or intelligent maintenance assistants, including circuit inspection, component testing, and maintenance procedures. Parts query scenario: providing parts descriptions, specifications, model numbers, and replacement guidance to ensure accurate parts selection during maintenance. Corpus categories are classified according to the target corpus content, and corresponding classification standards are formulated for each corpus category to form the automotive repair corpus classification template.

After the application scenario is determined, core information required to be provided in the application scenario is determined according to the application scenario, namely target corpus content. For example, a fault code scenario includes fault code definitions, fault symptoms, circuit inspection, component testing, maintenance guides, and the like. A circuit inspection scenario includes circuit diagrams, signal testing, fault point locating methods, and the like. A component testing scenario includes component names, specifications, testing standards, replacement procedures, and the like. A parts scenario includes parts names, parts numbers, applicable vehicle models, parameter specifications, and the like.

After the target corpus content is determined, data is scientifically classified and organized into different corpus categories. A basis for classification of each category is a usage function and a content attribute of a corpus. For example:
Fault code corpus: fault codes and associated definitions, symptoms, detection methods, and maintenance guides.

Circuit diagram corpus: circuit structure diagrams, test points, and signal detection methods.

Component corpus: specification parameters, testing methods, and installation and replacement procedures of components.

Maintenance manual corpus: standardized maintenance steps and processes.

Further, classification standards uniformly define content structures, field requirements, and format specifications of each corpus category. Such definition ensures integrity, consistency, and usability of data. For example, the classification standards include: Field definitions: specific fields required to be included in each corpus category and meanings of the specific fields. Format standards: formats for data storage (e.g., JSON, XML, or tabular structures). Content specifications: filling requirements for data content, for example, mandatory items, character length, and terminology unification.

After the target corpus content requirements, the corpus category division, and the formulation of classification standards are completed, an automotive repair corpus classification template is finally formed. For example, the content of a fault code corpus classification template includes fault codes, brands, vehicle models, model years, circuit inspection, circuit testing, component testing, and maintenance guides. The automotive repair corpus classification template is a standardized data framework designed for vehicle diagnostic and maintenance data, has clear classification structures and field requirements, and provides unified standards for data collection, cleaning, audit, and storage.

S200: Formulating a collection scheme based on the automotive repair corpus classification template and acquiring vehicle diagnostic and maintenance data.

Exemplarily, the collection scheme refers to a plan and an execution process for acquiring vehicle diagnostic and maintenance data formulated according to content standards and data requirements defined in the automotive repair corpus classification template. For example, the collection scheme includes the following key elements: (1) Collection source: public data, cooperative channel data, offline data, purchased data, and the like. (2) Collection content scope: fault code definitions, fault phenomena, circuit diagrams, maintenance procedures, and the like. The specification of coverage scopes of data includes dimensions of brands, vehicle models, model years, and system components. (3) Collection standard: definition of format requirements of data and formulation of data quality standards, for example, requirements that data fields be complete, data content be accurate and unambiguous. (4) Task execution process: decomposition of collection tasks into a plurality of subtasks and assignment of the subtasks to collection devices, and setting of completion time nodes and priorities of tasks to ensure orderly progress of collection work.

According to the collection sources and the collection standards defined in the collection scheme, data collection work is executed by data collection personnel or automated tools. For example, vehicle maintenance manuals and fault code tables are downloaded from network databases; fault diagnosis records of specific brand vehicle models are obtained through cooperative channels; and offline paper documents are scanned, digitized, and organized into structured data.

The vehicle diagnostic and maintenance data finally obtained includes: fault code related information, including fault code numbers, definitions, and fault phenomena; circuit inspection methods, including circuit diagrams, testing steps, and parameter standards; component testing information, including testing standards, detection methods, and replacement instructions of components; and maintenance guidance information, including troubleshooting steps and solutions in maintenance manuals.

In an embodiment, in the step S200, formulating the collection scheme based on the automotive repair corpus classification template and acquiring the vehicle diagnostic and maintenance data includes the following.

A collection source of the vehicle diagnostic and maintenance data is analyzed and determined according to the automotive repair corpus classification template.

Exemplarily, under the guidance of the designed automotive repair corpus classification template, analysis and determination of collection sources of data are first performed, namely channels providing vehicle diagnostic and maintenance data are obtained. Collection sources of data are classified into the following categories: (1) Public data: publicly available maintenance materials on networks, for example, technical documents on official websites of automobile manufacturers, online maintenance manuals, industry standard databases, and the like. (2) Cooperative channel data: high-quality vehicle diagnostic and maintenance data obtained through cooperation with automobile manufacturers, maintenance institutions, and third-party data suppliers. (3) Offline data: manuals and paper maintenance records provided by maintenance factories and technical personnel, requiring digitization processing. (4) Purchased data: vehicle fault diagnosis and maintenance data sets purchased from professional data suppliers.

For example, for a "vehicle fault code diagnosis" scenario, collection sources can include technical manuals released on official websites of automobile manufacturers, fault code diagnosis records obtained through cooperation with maintenance factories, historical fault maintenance data provided by data suppliers, and the like.

The collection sources are evaluated, a collection scope and a collection standard are formulated, and a collection task is generated.

In detail, the feasibility and quality evaluation are performed on the determined collection sources to screen reliable data sources. Evaluation indicators include: Data accuracy: whether a source is credible and whether data content is authoritative. Data integrity: whether a source can provide all required information (e.g., fault codes, detection methods, and maintenance guides). Data accessibility: whether a source is easy to access, for example, whether permissions, cooperation agreements, or payment are required. Data timeliness: whether source data is updated timely and meets current vehicle models and technical requirements.

Next, a data collection scope to be collected is specified, including brands and vehicle models, production years, and data categories, such as fault code data, circuit inspection data, component testing data, and maintenance manual data. Then, collection standards are formulated. The collection standards are configured to regulate data formats and data quality of collected data, including: data formats, unified as JSON, XML, CSV, or other formats to facilitate subsequent processing; content specifications, ensuring field integrity, for example, fault code data including "definitions, symptoms, and detection steps"; and data quality requirements, ensuring absence of redundancy and errors and satisfying accuracy and usability standards.

Finally, specific collection tasks are generated according to the collection sources, the collection scopes, and the collection standards, including: task objectives, indicating data to be collected; collection sources, specifying data sources; data standards, indicating format requirements, field content, and quality requirements; and execution modes, indicating whether tasks are executed automatically or require manual participation.

The collection task is distributed to a corresponding device for execution to obtain the vehicle diagnostic and maintenance data from different collection sources. Exemplarily, the collection tasks are distributed to corresponding collection devices or tools to execute data collection work. Task distribution modes include: automated tools, for example, crawler programs and API invocation scripts, configured to automatically collect data from network databases or cooperative channels; manual operations, in which data collection personnel manually acquire data from offline files and maintenance records and input the data into a system; and a hybrid mode, in which partial data is automatically collected and partial data requires manual verification and supplementation. Through task execution, the vehicle diagnostic and maintenance data meeting template requirements is acquired from different collection sources, thereby providing support for subsequent data processing and storage.

S300: Performing first preprocessing on the vehicle diagnostic and maintenance data to obtain standardized vehicle diagnostic and maintenance data.

Exemplarily, the first preprocessing mainly solves the problems of format, content, and quality existing in the vehicle diagnostic and maintenance data, so as to make the data to become standardized and consistent, thereby laying a foundation for subsequent audit, storage, and application. For example, the following operations are performed on the collected vehicle diagnostic and maintenance data: (1) Data formatting processing: converting the vehicle diagnostic and maintenance data into a unified standard format (e.g., JSON, XML, or CSV) to address inconsistency of data formats from different sources. (2) Data content normalization processing: cleaning and organizing data content to remove redundant information, irrelevant content, or erroneous data, and unifying field names, terminology standards, and unit representations, so as to ensure standardized and consistent data content. (3) Data screening and deduplication: performing deduplication on the collected data to remove duplicate content, screening data meeting requirements of the automotive repair corpus classification template, and eliminating irrelevant portions or portions failing to meet requirements. (4) Field completion and verification: completing missing fields of data or marking missing fields as a pending processing state, and verifying the integrity and preliminary accuracy of data to ensure all required fields have values.

After the first preprocessing, the generated standardized vehicle diagnostic and maintenance data has the following characteristics:
Unified formats: all data adopts a consistent data format, for example, JSON or XML.

Standardized content: field names, terminology standards, and unit representations are standardized, and data content is clear and explicit.

Improved integrity: missing portions of data are completed or marked, thereby ensuring integrity and usability of data.

Redundant data removal: duplicate data and invalid data are eliminated, thereby causing data to be more concise.

In an embodiment, in the step S300, performing first preprocessing on the vehicle diagnostic and maintenance data to obtain the standardized vehicle diagnostic and maintenance data includes the following.

Formatting process is performed on the vehicle diagnostic and maintenance data based on a preset cleaning template to obtain vehicle diagnostic and maintenance data with a unified format.

Exemplarily, a cleaning template is a data processing specification and a standard rule preset in advance and configured to guide data formatting processing and data content normalization. The cleaning template is usually designed by business experts and model experts according to the application requirement and the corpus template, and includes: data field requirements (e.g., fault codes, fault definitions, and maintenance steps), data format standards (e.g., JSON, XML, and CSV), and content specification requirements (e.g., terminology standardization, unit unification, and mandatory field settings).

Data format standardization is performed on the collected vehicle diagnostic and maintenance data according to the cleaning template, which can solve problems of inconsistent data formats, incomplete or redundant fields, and non-unified terminology and units. Then, the vehicle diagnostic and maintenance data with the unified format is input into a preset language model, and the standardized vehicle diagnostic and maintenance data is generated according to the format requirement and the content requirement of the automotive repair corpus classification template.

The vehicle diagnostic and maintenance data with the unified format are inputted into a preset language model, and the standardized vehicle diagnostic and maintenance data is generated according to a format requirement and a content requirement of the automotive repair corpus classification template.

For example, the language model refers to a pre-trained large-scale natural language processing model (e.g., generative pre-trained transformer (GPT) or bidirectional encoder representations from transformers (BERT)). A function of the language model is automatic generation or supplementation of structured and standardized data content according to input data and preset rules. The automotive repair corpus classification template defines the format requirement and the content requirement of the vehicle diagnostic and maintenance data and serves as a guiding standard for output results of the language model. The formatted data is provided as input and transmitted to the language model. The language model automatically completes, standardizes, and organizes data content according to requirements of the automotive repair corpus classification template, thereby generating the standardized vehicle diagnostic and maintenance data meeting the standard.

For example, the input parameters can be fault codes and maintenance manuals, and output parameters generated by the language model according to the format requirement and the content requirement of the automotive repair corpus classification template can be fault codes, brands, vehicle models, model years, circuit inspection, circuit testing, component testing, and maintenance guides.

Further, through formatting processing and automated generation by the language model, the standardized vehicle diagnostic and maintenance data finally obtained has the following characteristics:
Unified formats: all data satisfies format requirements of the template and is applicable to system storage and invocation.

Complete content: missing fields (for example, fault symptoms and maintenance guides) are automatically completed and standardized.

Standardized output: the output meets requirements of the automotive repair corpus classification template, and content is standardized and accurate.

High applicability: high-quality data support is provided for subsequent audit, storage, and application (for example, intelligent diagnosis systems and maintenance guidance systems).

S400: Auditing the standardized vehicle diagnostic and maintenance data to obtain standard vehicle diagnostic and maintenance data.

Exemplarily, specific operations for auditing the standardized vehicle diagnostic and maintenance data include the following aspects: (1) field integrity inspection: ensuring that each data record includes all mandatory fields required by the template, for example, fault codes, fault definitions, fault symptoms, circuit inspection methods, component testing standards, and maintenance guides; (2) content accuracy verification: comparing whether data content conforms to actual business standards, for example, verifying whether definitions of fault codes are consistent with information in industry standards or maintenance manuals, and verifying whether fault symptoms, detection steps, and maintenance guides have correct logic and operational guidance; for example, in original data, a fault definition of "P0123" is described as "circuit fault", and the audit operation determines that the content is overly generic and requires correction to a specific definition; (3) data consistency verification: unifying terminology, formats, and units to ensure use of standard terminology and consistent units and formats across data; (4) data compliance inspection: ensuring reliability of data sources and conformity with business specifications, particularly performing secondary verification on third-party data or manually entered data; and (5) audit feedback and correction: correcting or supplementing data problems identified during an auditing process. If certain data cannot be corrected, the data is marked as abnormal and temporarily excluded from a standard data set.

In an embodiment, in the step S400, auditing the standardized vehicle diagnostic and maintenance data to obtain the standard vehicle diagnostic and maintenance data includes:
verifying accuracy and integrity of the standardized vehicle diagnostic and maintenance data based on a predetermined audit standard; and correcting or supplementing standardized vehicle diagnostic and maintenance data failing to satisfy the audit standard until the standardized vehicle diagnostic and maintenance data satisfies the audit standard, thereby generating the standard vehicle diagnostic and maintenance data.

The audit standard is a preset data quality evaluation rule configured to verify standardized data and ensure that data meets the quality requirements. The standardized vehicle diagnostic and maintenance data is verified one by one using automated verification tools or manual inspection to determine conformity with the audit standard. If problems are identified during the auditing process, the following measures can be performed: (1) Correcting erroneous content: correcting inaccurate or non-standard field content. For example, replacing an incorrect fault code definition with a correct standard definition. (2) Supplementing missing content: completing missing fields or content. For example, supplementing a specific description in the "fault symptom" field, such as "unstable idle, weak acceleration". (3) Re-verification: reverifying data after correction or supplementation to ensure conformity with the audit standard. (4) Iterative correction process: if corrected or supplemented data still does not fully satisfy the audit standard, repeating the correction process until the standardized vehicle diagnostic and maintenance data passes the audit, thereby generating the standard vehicle diagnostic and maintenance data.

S500: Performing second preprocessing on the standard vehicle diagnostic and maintenance data to obtain to-be-stored vehicle diagnostic and maintenance data meeting a requirement, and storing the to-be-stored vehicle diagnostic and maintenance data meeting the requirement in a database to generate an automotive repair corpus.

Exemplarily, the second preprocessing is to perform deep processing and structural optimization on the standard vehicle diagnostic and maintenance data, including operations such as vectorization, data compression, deduplication, field supplementation, and format standardization, so that the data is more standardized and structured, and meets database storage design requirements; and the corresponding vector representations are generated to improve data retrievability and consistency.

Subsequently, to-be-stored data meeting the requirement after the second preprocessing is imported into a database according to predetermined storage rules. The storage rules can include definitions of field structures, index creation, data format standardization, and selection of storage modes, for example, a relational database for storing field data and a vector database for storing vector data.

Finally, the data is stored in the database to form an automotive repair corpus, a standardized and structured collection of the vehicle diagnostic and maintenance data. The automotive repair corpus supports rapid data retrieval and provides high-quality data support for intelligent diagnosis systems, fault analysis platforms, and the like, thereby meeting practical application requirements such as vehicle maintenance and fault troubleshooting.

In an embodiment, in the step S500, performing second preprocessing on the standard vehicle diagnostic and maintenance data to obtain the to-be-stored vehicle diagnostic and maintenance data meeting the requirement and storing the to-be-stored vehicle diagnostic and maintenance data meeting the requirement in the database to generate the automotive repair corpus includes: vectorizing the standard vehicle diagnostic and maintenance data based on a vector model to obtain structured standard vehicle diagnostic and maintenance data.

Exemplarily, the vector model is a commonly used model in deep learning configured to convert unstructured data into computable vector representations. In data processing, common tabular data (e.g., fields in a database) is referred to as structured data, which has a fixed format and is convenient for processing and storage. The unstructured data (e.g., text, images, audio, and video) cannot be directly processed using the conventional structured method due to the complex forms of the data. Therefore, such data needs to be converted into a form suitable for computation and analysis, and this process is referred to as vectorization.

The vectorization is a process of converting the unstructured data into multidimensional floating-point arrays, which can represent semantics and features of the data. For example, a vectorized array can have a form such as [0.3333, 0.1224, 0.3222, ...], where each value represents a measure of a semantic feature of the data in a corresponding dimension. A computational model used for vectorization is referred to as a vector model, also called an embedding model, which extracts semantic information from data and generates high-dimensional vector representations using a deep learning algorithm.

During the vectorization, the standard vehicle diagnostic and maintenance data (e.g., fault codes, fault definitions, maintenance guides, and data in the form of text, images, audio, or video) is typically vectorized using a block-based approach. For example, an article is divided into a plurality of blocks by paragraphs, and each block is independently vectorized to generate a plurality of sets of floating-point vectors. This approach preserves semantic features of the data while facilitating subsequent storage, retrieval, and analysis.

The structured standard vehicle diagnostic and maintenance data is stored in the database according to a predetermined storage rule to obtain the automotive repair corpus.

Exemplarily, after the vectorization and structured processing is completed, the standard vehicle diagnostic and maintenance data is stored in a database. The data is converted into multi-dimensional floating-point forms (vector representations), and this form highly abstracts semantic features of the data. The unstructured content such as fault codes, fault definitions, and maintenance guides is stored in the form of high-dimensional floating-point vectors, which differs from text content stored in a conventional database. After the data is stored in the database, an automotive repair corpus is formed. The automotive repair corpus includes standardized and structured vehicle diagnostic and maintenance data, and provides support for semantic retrieval and intelligent applications.

It should be noted that the content stored in the database is not visible text or fields in a conventional sense, but high-dimensional vector data. The fault code definitions and corresponding content are converted into floating-point forms and stored in the database. Therefore, the data in the database is not directly visible and exists only in the form of large quantities of floating-point numbers. These vector data do not directly correspond to original field content, but represent multi-dimensional abstract representations of semantic features.

In an embodiment, after performing second preprocessing on the standard vehicle diagnostic and maintenance data to obtain the to-be-stored vehicle diagnostic and maintenance data meeting the requirement, and storing the to-be-stored vehicle diagnostic and maintenance data meeting the requirement in the database to generate the automotive repair corpus, the full-link data management method further includes the following.

Query data input by a user is vectorized based on a query request of the user to generate a query vector.

Exemplarily, when a user initiates a query request, query data input by the user, for example, fault descriptions, keywords, and fault codes, are vectorized, that is, query content is converted into a set of numerical vectors through a preset vector model, namely, a set of multidimensional floating-point arrays. Such a vector representation can capture semantic information of the query content, thereby enabling the system to understand deeper semantic meaning of the query content.

Standard vehicle diagnostic and maintenance data is retrieved in the automotive repair corpus having high similarity to the query vector using a vector similarity algorithm.

Exemplarily, since the standard vehicle diagnostic and maintenance data stored in the automotive repair corpus has been vectorized, each data block corresponds to a high-dimensional floating-point vector. Accordingly, by using a vector similarity algorithm (such as cosine similarity or Euclidean distance), the similarity between a query vector and each stored vector in the automotive repair corpus is calculated, and several data block vectors having the highest similarity are retrieved.

Standard vehicle diagnostic and maintenance data having the highest matching degree is determined according to a retrieval result, and the standard vehicle diagnostic and maintenance data is outputted through a preset interface.

Specifically, vector blocks having the highest matching degrees are determined by ranking similarity scores of the retrieved data block vectors. The vector blocks correspond to original textual content in the automotive repair corpus. Through a mapping relationship, the vector blocks are restored into readable vehicle diagnostic and maintenance data. Subsequently, a large model (for example, a deep learning model or an artificial intelligence (AI) model) is invoked to organize and process the vehicle diagnostic and maintenance data. Thereafter, output results having improved logical structure, coherence, and professionalism are returned to or displayed for a user through an application programming interface (API).

It should be noted that, throughout the entire data management process, the present invention achieves efficient and precise data management through automated task dispatching and workflow mechanisms. By setting completion time for each workflow stage and performing real-time progress tracking, the ordered linkage among workflow stages is ensured, thereby significantly improving execution efficiency of the data management links.

According to the full-link data management method of the embodiment of the present invention, an automotive repair corpus classification template is designed by combining an application scenario and a business requirement to complete standardized classification of data, and a collection scheme is formulated to collect vehicle diagnostic and maintenance data; the collected data is formatted and standardized by first preprocessing, thereby solving the problems such as inconsistent data formats and redundancy in raw data; the accuracy and integrity of the data are verified by the auditing operation to obtain standard vehicle diagnostic and maintenance data; and subsequently, the standard data are vectorized and structured by second preprocessing to meet storage and retrieval requirements, and are finally stored in a database to construct a high-quality automotive repair corpus. The technical solution revolves around a full-link data management process, covering data collection, cleaning, audit, and storage. The method of the present invention achieves closed-loop management of data, thereby significantly improving the quality and usability of data.

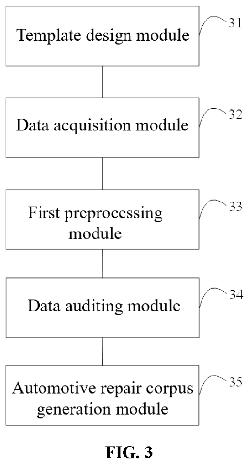

The present invention further provides a full-link data management apparatus, as shown in FIG. 3, the full-link data management apparatus includes:
a template design module 31, configured to design an automotive repair corpus classification template according to an application scenario and a business requirement;
a data acquisition module 32, configured to formulate a collection scheme based on the automotive repair corpus classification template and acquire vehicle diagnostic and maintenance data;
a first preprocessing module 33, configured to perform first preprocessing on the vehicle diagnostic and maintenance data to obtain the standardized vehicle diagnostic and maintenance data;
a data auditing module 34, configured to audit the standardized vehicle diagnostic and maintenance data to obtain the standard vehicle diagnostic and maintenance data; and
an automotive repair corpus generation module 35, configured to perform second preprocessing on the standard vehicle diagnostic and maintenance data to obtain to-be-stored vehicle diagnostic and maintenance data meeting a requirement, and store the to-be-stored vehicle diagnostic and maintenance data meeting the requirement in a database to generate an automotive repair corpus.

It can be understood that the apparatus of this embodiment corresponds to the method of the foregoing embodiment, and optional features described in the foregoing embodiment are equally applicable to this embodiment. Details are not described herein again.

The present invention further provides a computer device. Exemplarily, the computer device includes a processor and a memory, where the memory stores a computer program, and the processor executes the computer program, thereby causing the device to perform the full-link data management method described above or to implement functions of the modules of the full-link data management apparatus described above.

The processor can be an integrated circuit chip having signal processing capability. The processor can be a general-purpose processor, including at least one of a central processing unit (CPU), a graphics processing unit (GPU), a network processor (NP), a digital signal processor (DSP), an application-specific integrated circuit (ASIC), a field-programmable gate array (FPGA), other programmable logic devices, discrete gate or transistor logic devices, or discrete hardware components. The general-purpose processor can be a microprocessor, or the processor can be any conventional processor, and can implement or execute the methods, steps, and logic flowcharts disclosed in the embodiments of the present invention.

The memory can include, but is not limited to, a random access memory (RAM), a read-only memory (ROM), a programmable read-only memory (PROM), an erasable programmable read-only memory (EPROM), an electrically erasable programmable read-only memory (EEPROM), or the like. The memory is configured to store the computer program, and the processor, upon receiving execution instructions, correspondingly executes the computer program.

The present invention further provides a computer-readable storage medium configured to store the computer program used by the computer device described above. For example, the computer-readable storage medium can include, but is not limited to, a USB flash drive, a portable hard drive, a read-only memory (ROM), a random access memory (RAM), a magnetic disk, an optical disk, or any other medium capable of storing program code.

In the embodiments provided by the present invention, it should be understood that the apparatuses and methods disclosed herein can also be implemented by other means. The apparatus embodiments described above are merely exemplary. For example, the flowcharts and structural diagrams in the drawings illustrate possible architectures, functions, and operations of the apparatuses, methods, and computer program products according to various embodiments of the present invention. In this regard, each block in the flowcharts or the block diagrams can represent a portion of a module, a program segment or codes, where the portion of the module, the program segment or the codes includes one or more executable instructions for implementing specified logical functions. It should also be noted that, in some alternative implementations, the functions shown in the blocks can occur in an order different from the order shown in the drawings. For example, two consecutive blocks can, in fact, be executed substantially in parallel, and the two blocks can sometimes be executed in a reverse order, depending upon the functions involved. It should also be noted that each block of the structural diagrams and/or the flowcharts and a combination of the blocks in the structural diagrams and/or the flowcharts can be implemented through a dedicated hardware-based system that executes a specified function or operation, or can be implemented through a combination of a dedicated hardware and a computer instruction.

In addition, the functional modules or units in the various embodiments of the present invention can be integrated together to form an independent part, or can exist separately as individual modules, or two or more modules can be integrated to form an independent part.

When the functions are implemented in a form of a software functional module and sold or used as an independent product, the functions can be stored in a computer-readable storage medium. Based on such an understanding, the technical solutions of the present invention essentially or parts contributing to the prior art or some of the technical solutions can be embodied in a form of a software product. The computer software product is stored in a storage medium, and includes several instructions for instructing a computer device (which can be a smartphone, a personal computer, a server, a network device, or the like) to perform all or some of the steps of the methods described in the embodiments of the present invention.

The foregoing descriptions are merely specific embodiments of the present invention, but are not intended to limit the protection scope of the present invention. Any variation or replacement readily figured out by those skilled in the art within the technical scope disclosed in the present invention shall fall within the protection scope of the present invention.

## Claims

1. A full-link data management method, **characterized by** comprising:
designing an automotive repair corpus classification template according to an application scenario and a business requirement;
formulating a collection scheme based on the automotive repair corpus classification template and acquiring vehicle diagnostic and maintenance data;
performing first preprocessing on the vehicle diagnostic and maintenance data to obtain standardized vehicle diagnostic and maintenance data, and auditing the standardized vehicle diagnostic and maintenance data to obtain standard vehicle diagnostic and maintenance data; and
performing second preprocessing on the standard vehicle diagnostic and maintenance data to obtain to-be-stored vehicle diagnostic and maintenance data meeting a requirement, and storing the to-be-stored vehicle diagnostic and maintenance data meeting the requirement in a database to generate an automotive repair corpus.

2. The full-link data management method according to claim 1, wherein the designing the automotive repair corpus classification template according to the application scenario and the business requirements comprises:
determining target corpus content based on the application scenario; and
classifying corpus categories according to the target corpus content, and formulating corresponding classification standards for each corpus category to form the automotive repair corpus classification template.

3. The full-link data management method according to claim 1, wherein the formulating the collection scheme based on the automotive repair corpus classification template and acquiring the vehicle diagnostic and maintenance data comprises:
analyzing and determining a collection source of the vehicle diagnostic and maintenance data according to the automotive repair corpus classification template;
evaluating the collection source, formulating a collection scope and a collection standard, and generating a collection task; and
distributing the collection task to a corresponding device for execution to obtain the vehicle diagnostic and maintenance data from different collection sources.

4. The full-link data management method according to claim 1, wherein the performing the first preprocessing on the vehicle diagnostic and maintenance data to obtain the standardized vehicle diagnostic and maintenance data comprises:
performing formatting process on the vehicle diagnostic and maintenance data based on a preset cleaning template to obtain vehicle diagnostic and maintenance data with a unified format; and
inputting the vehicle diagnostic and maintenance data with the unified format into a preset language model, and generating the standardized vehicle diagnostic and maintenance data according to a format requirement and a content requirement of the automotive repair corpus classification template.

5. The full-link data management method according to claim 1, wherein the auditing the standardized vehicle diagnostic and maintenance data to obtain the standard vehicle diagnostic and maintenance data comprises:
verifying accuracy and integrity of the standardized vehicle diagnostic and maintenance data based on a predetermined audit standard; and
correcting or supplementing standardized vehicle diagnostic and maintenance data failing to satisfy the audit standard until the standardized vehicle diagnostic and maintenance data satisfies the audit standard, thereby generating the standard vehicle diagnostic and maintenance data.

6. The full-link data management method according to claim 1, wherein the performing second preprocessing on the standard vehicle diagnostic and maintenance data to obtain the to-be-stored vehicle diagnostic and maintenance data meeting the requirement and storing the to-be-stored vehicle diagnostic and maintenance data meeting the requirement in the database to generate the automotive repair corpus comprises:
vectorizing the standard vehicle diagnostic and maintenance data based on a vector model to obtain structured standard vehicle diagnostic and maintenance data; and
storing the structured standard vehicle diagnostic and maintenance data in the database according to a predetermined storage rule to obtain the automotive repair corpus.

7. The full-link data management method according to claim 1, after performing second preprocessing on the standard vehicle diagnostic and maintenance data to obtain the to-be-stored vehicle diagnostic and maintenance data meeting the requirement, and storing the to-be-stored vehicle diagnostic and maintenance data meeting the requirement in the database to generate the automotive repair corpus, further comprising:
vectorizing query data input by a user based on a query request of the user to generate a query vector;
retrieving standard vehicle diagnostic and maintenance data in the automotive repair corpus having high similarity to the query vector using a vector similarity algorithm; and
determining standard vehicle diagnostic and maintenance data having the highest matching degree according to a retrieval result, and outputting the standard vehicle diagnostic and maintenance data through a preset interface.

8. A full-link data management apparatus, **characterized by** comprising:
a template design module, configured to design an automotive repair corpus classification template according to an application scenario and a business requirement;
a data acquisition module, configured to formulate a collection scheme based on the automotive repair corpus classification template and acquire vehicle diagnostic and maintenance data;
a first preprocessing module, configured to perform first preprocessing on the vehicle diagnostic and maintenance data to obtain the standardized vehicle diagnostic and maintenance data;
a data auditing module, configured to audit the standardized vehicle diagnostic and maintenance data to obtain the standard vehicle diagnostic and maintenance data; and
an automotive repair corpus generation module, configured to perform second preprocessing on the standard vehicle diagnostic and maintenance data to obtain to-be-stored vehicle diagnostic and maintenance data meeting a requirement, and store the to-be-stored vehicle diagnostic and maintenance data meeting the requirement in a database to generate an automotive repair corpus.

9. A computer device, **characterized by** comprising a processor and a memory, wherein the memory stores a computer program, and the processor is configured to execute the computer program to implement the full-link data management method according to any one of claims 1-7.

10. A computer-readable storage medium, storing a computer program, **characterized in that** the computer program, when executed on a processor, implements the full-link data management method according to any one of claims 1-7.
